(19) Europäisches Patentamt
European Patent Office
Office européen des brevets

(11) **EP 1 757 791 A2**

(12) **EUROPÄISCHE PATENTANMELDUNG**

(43) Veröffentlichungstag:
**28.02.2007 Patentblatt 2007/09**

(51) Int Cl.:
*F02D 41/14* (2006.01)    *F02D 19/08* (2006.01)

(21) Anmeldenummer: **06119290.2**

(22) Anmeldetag: **22.08.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **26.08.2005   DE 102005040551**

(71) Anmelder: **SIEMENS AKTIENGESELLSCHAFT**
**80333 München (DE)**

(72) Erfinder:
• **Hoffmann, Robert**
  **94099, Ruhstorf/Rott (DE)**
• **Wolpert, Hartmut**
  **93197 Zeitlarn (DE)**

(54) **Verfahren zum Ermitteln eines Biodieselanteils im Kraftstoff einer Dieselverbrennungskraftmaschine**

(57)    Verfahren zum Ermitteln eines Biodieselanteils im Kraftstoff einer Dieselverbrennungskraftmaschine

Es wird ein Verfahren zum Ermitteln eines Anteils von Biodiesel in einem Kraftstoff zum Betreiben in einer Dieselverbrennungskraftmaschine vorgeschlagen, mit folgenden Schritten:
- Messen der Luftzahl $\lambda$ im Abgas der Dieselverbrennungskraftmaschine;
- Rechnerisches Ermitteln eines Erwartungswertes der Luftzahl $\lambda$; und
- Ermitteln des Anteils an Biodiesel aus einer Differenz zwischen der gemessenen Luftzahl $\lambda$ und dem rechnerisch ermittelten Erwartungswert der Luftzahl $\lambda$.

EP 1 757 791 A2

**Beschreibung**

Zum Betreiben einer Dieselverbrennungskraftmaschine kann fossiler Diesel und biologischer Diesel (beispielsweise Rapsöl-Methylester RME, Fettsäure-Methylester FAME, Soja-Methylester SOME usw.) verwendet werden. Dabei kann Dieselkraftstoff aus den fossilen und biologischen Bestandteilen beliebig gemischt werden. Zur Erzeugung eines angeforderten Drehmoments der Dieselverbrennungskraftmaschine muss eine bestimmte Energiemenge in Form des Dieselkraftstoffs in einen Brennraum der Dieselverbrennungskraftmaschine eingebracht werden.

Hauptkenngrößen für eine genaue Zumessung des Dieselkraftstoffs sind eine Kraftstoffmenge (Energieinhalt) und ein Einspritzwinkel (Berücksichtigung eines Zündverzugs), der auf einen oberen Totpunkt eines Kolbens der Dieselverbrennungskraftmaschine bezogen ist. Einem Einspritzsystem der Dieselverbrennungskraftmaschine ist dabei in der Regel nicht bekannt, welche Energiemenge pro volumetrischer Einheit sich im verwendeten Dieselkraftstoff befindet (Kenngrößen dafür sind beispielsweise eine Kraftstoffdichte und ein H/C-Verhältnis). Ferner ist dem Einspritzsystem auch nicht bekannt, welche Eigenschaften der verwendete Dieselkraftstoff hinsichtlich des Zündverzugs aufweist. Diese sind beispielsweise durch eine durchschnittliche Kettenlänge der Kohlenwasserstoffketten bzw. durch eine Cetan-Zahl des Dieselkraftstoffs definiert.

Ein optimaler Betriebspunkt der Dieselverbrennungskraftmaschine ist hinsichtlich einer Einspritzmenge und eines Einspritzwinkels kraftstoffabhängig, wobei der optimale Betriebspunkt kraftstoffspezifisch gegenwärtig nicht ohne erheblichen Zusatzaufwand an Sensorik (beispielsweise in Form eines RME-Sensors) einstellbar ist. Dadurch können sich unter Verwendung unterschiedlicher Dieselkraftstoffzusammensetzungen erhebliche Verbrauchs- und/oder Komfortnachteile ergeben.

Es ist weiterhin bereits bekannt, dass es mittels einer linearen Lambda-Sonde in einem Abgaspfad der Dieselverbrennungskraftmaschine möglich ist, Restsauerstoff im Abgas nach der Verbrennung zu messen. Aus einem Signal eines in einem Frischluftpfad der Dieselverbrennungskraftmaschine angeordneten Luftmassenmessers ist weiterhin bekannt, welche Menge an Sauerstoff zur Verbrennung des Kraftstoffs zur Verfügung stand.

Im Stand der Technik ist es ferner bekannt, dass die in den Brennraum der Dieselverbrennungskraftmaschine eingebrachte Kraftstoffmenge mathematisch rekonstruiert werden kann. Entsprechende mathematische Formeln finden sich beispielsweise in [R. Pischinger, M. Klell, T. Sams] "Thermodynamik der Verbrennungskraftmaschine", ISBN 3-211-83679-9.

Es ist die Aufgabe der vorliegenden Erfindung, ein verbessertes Verfahren zum Ermitteln eines Anteils von Biodiesel in einem Kraftstoff für eine Dieselverbrennungskraftmaschine bereitzustellen.

Die Aufgabe wird gelöst mit einem Verfahren gemäß Patentanspruch 1. Bevorzugte Weiterbildungen der Erfindung sind in abhängigen Ansprüchen definiert.

Das erfindungsgemäße Verfahren ist zum Ermitteln eines Anteils von Biodiesel in einem Kraftstoff zum Betreiben einer Dieselverbrennungskraftmaschine vorgesehen und umfasst folgende Schritte:

- Messen der Luftzahl $\lambda$ im Abgas der Dieselverbrennungskraftmaschine;
- Rechnerisches Ermitteln eines Erwartungswerts der Luftzahl $\lambda$; und
- Ermitteln des Anteils an Biodiesel aus einer Abweichung zwischen der gemessenen Luftzahl $\lambda$ und dem rechnerisch ermittelten Erwartungswert der Luftzahl $\lambda$.

Vorteilhaft kann die gemessene Luftzahl $\lambda$ dazu verwendet werden, um aus einer Abweichung zwischen der gemessenen Luftzahl $\lambda$ und dem rechnerisch ermittelten Erwartungswert der Luftzahl $\lambda$ auf einen Anteil an Biodiesel im verwendeten Kraftstoff für die Dieselverbrennungskraftmaschine zurückzuschliessen.

Durch den mittels der Erfindung bekannten Anteil an Biodiesel im Dieselkraftstoff kann vorteilhaft der Einspritzwinkel an den aktuell verwendeten Dieselkraftstoff angepasst werden. Insbesondere kann ein an den verwendeten Kraftstoff im Wesentlichen optimal angepasster Betriebspunkt der Dieselverbrennungskraftmaschine eingestellt werden. Dadurch kann eine Drehmomentenwirksamkeit einer Einspritzung deutlich verbessert sein.

Gemäß einer bevorzugten Weiterbildung des erfindungsgemäßen Verfahrens ist vorgesehen, dass zum rechnerischen Ermitteln des Erwartungswerts der Luftzahl $\lambda$ folgende mathematische Beziehung verwendet wird:

$$\lambda = \frac{MAF}{14,5 \times MF}$$

Vorteilhaft kann mit dieser mathematischen Beziehung eine mittels eines Luftmassenmessers gemessene Luftmasse MAF sowie eine berechnete Kraftstoffmenge MF dazu verwendet werden, um eine Größe eines Erwartungswerts der Luftzahl $\lambda$ zu ermitteln. Im Einspritzsystem der Dieselverbrennungskraftmaschine wird erfindungsgemäß stets von einer Verwendung von rein fossilem Diesel ausgegangen. Durch die mit Hilfe einer Messeinrichtung zum Erfassen von Restsauerstoff im Abgas (z.B. eine lineare Lambda-Sonde) gemessene Luftzahl $\lambda$ kann im Vergleich mit dem Erwartungswert der Luftzahl $\lambda$ auf einen Anteil von Biodiesel im Dieselkraftstoff zurückgeschlossen werden.

Die Erfindung wird nachfolgend im Detail beschrieben.

Die so genannte Luftzahl λ bezeichnet das Verhältnis der zu einer vollständigen Verbrennung des Kraftstoffs theoretisch notwendigen Menge Luft zum tatsächlichen vorhandenen Kraftstoff/Luftverhältnis. Ein stöchiometrisches Verhältnis liegt dann vor, wenn die vorhandenen Mengen an Kraftstoff und Luft eine vollständige Oxidation des Kraftstoff-Luftgemischs ermöglichen. In diesem Falle ist die Luftzahl λ gleich eins. Ein λ-Wert größer eins bedeutet, dass mehr Luft zur Verfügung steht als zur Oxidation benötigt wird. Der mittlere stöchiometrische Faktor für fossilen Diesel beträgt 14,5. Dies bedeutet, dass für eine vollständige Oxidation von fossilem Diesel 14,5 Mal mehr Luftmasse als Kraftstoffmasse zur Verfügung stehen muss. Ein Anteil an molekularem Sauerstoff in der Umgebungsluft wird mit 21% angenommen.

Aufgrund der bereits bekannten Tatsache, dass reiner Biodiesel durch einen zur Herstellung des Biodiesels verwendeten Veresterungsprozess einen nennenswerten Anteil an Sauerstoff aufweist, weist Biodiesel im Vergleich zu fossilem Diesel einen unterschiedlichen stöchiometrischen Faktor auf. Der stöchiometrische Faktor von Biodiesel beträgt in etwa 12,5. Aufgrund des gegenüber fossilem Diesel kleineren stöchiometrischen Faktors wird für eine vollständige Oxidation (Verbrennung) des Biodiesels im Vergleich zu einer vollständigen Oxidation von fossilem Diesel also weniger Luftmasse benötigt.

Erfindungsgemäß ist nunmehr vorgesehen, dass durch einen Vergleich eines gemessenen Wertes der Luftzahl λ mit einem rechnerisch ermittelten Erwartungswert für die Luftzahl λ auf einen Anteil an Biodiesel im verwendeten Dieselkraftstoff für die Dieselverbrennungskraftmaschine zurückgeschlossen wird.

Dies ist deswegen möglich, weil für die Ermittlung des Erwartungswerts der Luftzahl λ von rein fossilem Diesel ausgegangen wird und sich bei einer Verwendung von Biodiesel bzw. eines Gemischs aus Biodiesel und fossilem Diesel ein gegenüber der gemessenen Luftzahl λ veränderter Wert für die Luftzahl λ ergibt.

Aus einer Kennlinie, die Abweichungen der gemessenen Luftzahl λ von Erwartungswerten der Luftzahl λ entsprechenden Anteilen an Biodiesel im Dieselkraftstoff zuordnet, kann dann ein Anteil von Biodiesel im aktuell verwendeten Dieselkraftstoff ermittelt werden. Dabei wird angenommen, dass die Veränderung der gemessenen Luftzahl λ gegenüber dem berechneten Erwartungswert der Luftzahl λ ausschließlich aus den oben genannten unterschiedlichen Sauerstoffgehalten im fossilen Diesel und im Biodiesel resultiert.

Weitere Randbedingungen zur Durchführung des erfindungsgemäßen Verfahrens sind, dass die zur Messung der Luftzahl λ verwendete Lambda-Sonde und der zur Erfassung der Luftmasse verwendete Luftmassenmesser im Wesentlichen fehlerfrei funktionieren. Zudem ist ein geschlossener Abgaspfad in der Dieselverbrennungskraftmaschine erforderlich, wodurch eine Frischluftzufuhr in den Abgaspfad, die eine Verfälschung der gemessenen Luftzahl λ bewirken könnte, weitestgehend ausgeschlossen ist. Ferner sind geeignete Betriebsbedingungen der Dieselverbrennungskraftmaschine erforderlich. Beispielsweise sollte während der Durchführung des erfindungsgemäßen Verfahrens kein hochdynamischer Betrieb der Dieselverbrennungskraftmaschine und eine geeignete Betriebstemperatur und ein geeigneter Betriebspunkt der Dieselverbrennungskraftmaschine vorliegen.

Als Vorrichtung zum Erfassen des Restsauerstoffs im Abgas wird vorzugsweise eine im Stand der Technik bereits bekannte lineare Lambda-Sonde verwendet. Möglich ist aber auch, dass zur Erfassung des Restsauerstoffs ein Sensor zur Erfassung von Stickoxiden ($NO_x$) verwendet wird. Vorteilhaft ist bei der Durchführung des erfindungsgemäßen Verfahrens also nicht nur, dass keine zusätzliche Hardware in Form eines Sensors im Einspritzsystem der Dieselverbrennungskraftmaschine erforderlich ist. Es kann vielmehr die in der Regel bereits vorhandene Vorrichtung zum Erfassen des Restsauerstoffs im Abgas zur Durchführung des erfindungsgemäßen Verfahrens günstigerweise mitbenutzt werden.

Das erfindungsgemäße Verfahren wird vorzugsweise als Softwareprogramm in einem Motorsteuergerät hinterlegt und kann zur Anpassung des Einspritzwinkels (Start of Injection SOI) und/oder zur Anpassung der Einspritzmenge des Dieselkraftstoffs einer Verbrennungskraftmaschine mit interner Zündung unter Berücksichtigung der Zusammensetzung des Dieselkraftstoffs verwendet werden.

Als Weiterbildung des erfindungsgemäßen Verfahrens ist vorgesehen, dass zum rechnerischen Ermitteln des Erwartungswerts der Luftzahl λ folgende mathematische Beziehung verwendet wird:

$$\lambda = \frac{MAF}{14,5 \times MF}$$

mit den Parametern:

λ        Luftzahl
MAF        gemessene Luftmasse
MF        berechnete Kraftstoffmenge
14,5        mittlerer stöchiometrischer Faktor für fossilen Diesel

Die genannte mathematische Beziehung ist unter anderem aus dem oben genannten Standardwerk des Maschinenbaus bekannt.

Mit der beispielsweise mittels eines Heissfilmluftmassenmessers (HFM) gemessenen Luftmasse MAF und der berechneten (angeforderten) Kraftstoffmenge MF, die aus geometrischen Abmessungen und Einspritzzeiten des Einspritzsystems der Dieselverbrennungskraftmaschine und Kraftstoffdrücken ermittelt wird, ist es möglich, einen rechnerischen Erwartungswert für die Luftzahl $\lambda$ zu ermitteln. Die Luftmasse MAF wird dabei in einem Frischluftpfad ermittelt, der örtlich vor einer Brennkammer der Dieselverbrennungskraftmaschine angeordnet ist. Die genannte Berechnung geht also vom festen mittleren stöchiometrischen Faktor für fossilen Diesel aus, und ermöglicht damit die Erkennung eines geänderten stöchiometrischen Faktors eines Dieselkraftstoffs aufgrund einer geänderten Zusammensetzung, die nicht ausschließlich rein fossilen Diesel aufweist.

Für die Anwendung des erfindungsgemäßen Verfahrens bedeutet dies also, dass die Ermittlung des Erwartungswerts der Luftzahl $\lambda$ von einer Verbrennung von rein fossilem Diesel ausgeht. Wenn beispielsweise nach einer Betankung eines Kraftstofftanks der Dieselverbrennungskraftmaschine sich das Verhältnis zwischen fossilem Diesel und Biodiesel im Kraftstofftank ändert, liefert eine Messung der Luftzahl $\lambda$ aufgrund der geänderten Kraftstoffzusammensetzung eine geänderte Luftzahl $\lambda$.

Aus einer Kennlinie, die in einem Motorsteuergerät des Kraftfahrzeugs hinterlegt sein kann und die eine Zuordnung einer Abweichung zwischen einem Wert der Luftzahl $\lambda$ und der Luftzahl $\lambda$ für rein fossilen Diesel (Erwartungswert für Luftzahl $\lambda$) aufweist, kann nunmehr auf einen Anteil an Biodiesel im verwendeten Kraftstoff rückgeschlossen werden. Denkbar ist auch, dass eine weitere Kennlinie im Motorsteuergerät hinterlegt ist, die eine Abweichung der gemessenen Luftzahl $\lambda$ des verwendeten Kraftstoffs von der Luftzahl $\lambda$ für fossilen Diesel einem entsprechenden stöchiometrischen Faktor des verwendeten Kraftstoffs zuordnet. Die genannten Kennlinien werden beispielsweise in Labor- und Prüfstandsversuchen vorab in Referenzmessungen ermittelt.

Die obige mathematische Beziehung kann auch dazu verwendet werden, um aus dem gemessenen Wert für die Luftzahl $\lambda$ und der gemessenen Luftmasse MAF eine Dieselkraftstoffmenge mathematisch zu rekonstruieren. Zu diesem Zweck muss die mathematische Beziehung lediglich dahingehend umgestellt werden, dass das Produkt aus stöchiometrischem Faktor und berechneter Kraftstoffmenge MF dem Quotienten aus gemessener Luftmasse MAF und gemessener Luftzahl $\lambda$ gegenübergestellt wird. Auf diese Weise werden die gemessenen Größen Luftmasse MAF und Luftzahl $\lambda$ dem Produkt aus stöchiometrischem Faktor für fossilen Diesel und der berechneten Kraftstoffmenge MF gegenübergestellt.

Dadurch wird bei dieser Ausführungsform des erfindungsgemäßen Verfahrens ein Vergleich zwischen der angeforderten (berechneten) Kraftstoffmenge und der mathematisch rekonstruierten Kraftstoffmenge durchgeführt. Die angeforderte Kraftstoffmenge stellt dabei einen Erwartungswert der Kraftstoffmenge dar, die mathematisch rekonstruierte Kraftstoffmenge stellt einen Istwert der Kraftstoffmenge dar. Bezugspunkt dieses Vergleichs ist auch hier der mittlere stöchiometrische Faktor für fossilen Diesel. Bei vergleichbaren Bedingungen sollte ein Vergleich der angeforderten Kraftstoffmenge mit der rekonstruierten Kraftstoffmenge vergleichbare Ergebnisse liefern. Eine Abweichung, insbesondere eine sprunghafte Abweichung von einem Fahrzyklus zum nächsten, deutet auf eine Änderung des stöchiometrischen Faktors und damit eine geänderte Art Kraftstoff (insbesondere hinsichtlich der H/C und O/C-Verhältnisse) hin.

Es wird also bei der Durchführung des erfindungsgemäßen Verfahrens stets davon ausgegangen, dass sich im Kraftstofftank der Dieselverbrennungskraftmaschine rein fossiler Diesel befindet. Durch den Vergleich der angeforderten mit der mathematisch rekonstruierten Kraftstoffmenge kann eine Abweichung der verwendeten Dieselkraftstoffzusammensetzung von rein fossilem Diesel detektiert werden. Dies lässt sich auch damit begründen, dass sich fossiler Diesel von Biodiesel neben chemischen auch in physikalischen Eigenschaften, beispielsweise in der Dichte, grundsätzlich unterscheidet. Mithilfe einer Kennlinie, die einen Abweichungsgrad der Kraftstoffmenge einem Anteil an Biodiesel zuordnet, kann somit der Anteil von Biodiesel im verwendeten Kraftstoff detektiert werden. Der Unterschied in den Dichten von fossilem bzw. biologischem Diesel beruht im Wesentlichen auch auf den unterschiedlichen Sauerstoffgehalten von fossilem und biologischem Diesel. Der Sauerstoffanteil in Biodiesel beträgt in etwa 10 bis 12%, wodurch der stöchiometrische Faktor von Biodiesel im Vergleich zum stöchiometrischen Faktor von fossilem Diesel gesenkt wird.

Vorzugsweise kann die geschilderte Rekonstruktion der Kraftstoffmenge dazu benutzt werden, um ein Monitoring bzw. eine Diagnose des Motorverhaltens zu verbessern. Weiterhin kann mit der mathematisch rekonstruierten Kraftstoffmenge eine Beladungserfassung eines Partikelfilters der Dieselverbrennungskraftmaschine kraftstoffspezifisch geregelt werden. Biodiesel unterscheidet sich von fossilem Diesel nämlich auch dadurch, dass bei Biodiesel eine Notwendigkeit einer Regeneration des Partikelfilters deutlich reduziert ist. Vorteilhafterweise lässt sich also, wenn der Anteil an Biodiesel innerhalb des verwendeten Dieselkraftstoffs bekannt ist, zum Regenerieren des Partikelfilters erforderlicher Dieselkraftstoff einsparen. Geeignete Abgasnachbehandlungsstrategien sind mithilfe der Rekonstruktion der Kraftstoffmenge somit vorteilhaft durchführbar. Beispielsweise können Diagnoseschwellen innerhalb des Motorsteuergeräts enger gezogen werden.

Als besonders vorteilhaft wird bei der vorliegenden Erfindung angesehen, dass ein unterschiedlicher Zündverzug von Biodiesel und fossilem Diesel im Betriebsverhalten der Dieselverbrennungskraftmaschine berücksichtigt werden kann.

Mit dem erfindungsgemäßen Verfahren ist unabhängig von der Zusammensetzung des verwendeten Dieselkraftstoffs vorteilhaft ein gleichmäßiges Motorbetriebsverhalten unterstützt. Dies kann in einer verringerten Schadstoff- bzw. Geräuschemissionen der Dieselverbrennungskraftmaschine resultieren. Dadurch kann ein Kunden- bzw. Service-Nutzen deutlich erhöht sein.

Vorteilhaft können mit dem erfindungsgemäßen Verfahren auch Einspritzzeiten angepasst werden, beispielsweise wird bei Erkennung eines Dieselkraftstoffs mit erhöhter Dichte bei einem Kaltstartvorgang eine längere Einspritzung durchgeführt. Weiterhin kann eine Erfassung der Partikelfilterbeladung vorteilhaft angepasst und Fehldiagnosen aufgrund eines fest eingestellten stöchiometrischen Faktors können vermieden werden.

Zum Initialisieren des erfindungsgemäßen Verfahrens ist es günstig, dass an einem Bandende eines Fertigungsprozesses, wenn das Kraftfahrzeug erstmalig in Betrieb genommen wird, eine Beaufschlagung des erfindungsgemäßen Verfahrens mit einem Referenzdieselkraftstoff mit einem bekannten H/C-Verhältnis vorgenommen wird. Dadurch kann vorteilhaft ein Feststellen von Exemplarstreuungen des Luftmassenmessers bzw. der Messeinrichtung zum Erfassen des Restsauerstoffgehalts im Abgas durchgeführt werden.

Die in den Patentansprüchen und der Beschreibung offenbarten Merkmale der Erfindung können sowohl einzeln als auch in beliebiger Kombination für die Erfindung wesentlich sein.

## Patentansprüche

1. Verfahren zum Ermitteln eines Anteils von Biodiesel in einem Kraftstoff zum Betreiben einer Dieselverbrennungskraftmaschine, umfassend die Schritte:

   - Messen der Luftzahl λ im Abgas der Dieselverbrennungskraftmaschine;
   - Rechnerisches Ermitteln eines Erwartungswertes der Luftzahl λ; und
   - Ermitteln des Anteils an Biodiesel aus einer Differenz zwischen der gemessenen Luftzahl λ und dem rechnerisch ermittelten Erwartungswert der Luftzahl λ.

2. Verfahren nach Anspruch 1, wobei zum rechnerischen Ermitteln des Erwartungswerts der Luftzahl λ folgende mathematische Beziehung verwendet wird:

$$\lambda \;=\; \frac{MAF}{14{,}5 \times MF}$$

   mit den Parametern:

λ    Luftzahl
MAF    gemessene Luftmasse
MF    berechnete Kraftstoffmenge
14,5    mittlerer stöchiometrischer Faktor für fossilen Diesel

3. Verfahren nach Anspruch 1 oder 2, wobei zum Messen der Luftzahl λ eine Vorrichtung zum Ermitteln des Restsauerstoffs im Abgas der Dieselverbrennungskraftmaschine verwendet wird.

4. Verfahren nach einem der Ansprüche 2 oder 3, wobei die Differenz zwischen der gemessenen Luftzahl λ und dem Erwartungswert der Luftzahl λ einem entsprechenden Anteil an Sauerstoff im Kraftstoff zugeordnet wird.

5. Verfahren nach einem der Ansprüche 2 bis 4, wobei mit der mathematischen Beziehung eine in die Dieselverbrennungskraftmaschine eingebrachte Kraftstoffmenge mathematisch rekonstruiert wird, wobei der Anteil an Biodiesel im Kraftstoff aus einem Vergleich zwischen der berechneten Kraftstoffmenge (MF) und der mathematisch rekonstruierten Kraftstoffmenge ermittelt wird.

6. Verfahren nach einem der Ansprüche 1 bis 5, wobei zu Initialisierungszwecken eine Beaufschlagung des Verfahrens mit einem Referenzdieselkraftstoff durchgeführt wird.

7. Verfahren nach einem der Ansprüche 1 bis 6, wobei das Verfahren als Softwareprogramm in einem Motorsteuergerät der Dieselverbrennungskraftmaschine durchgeführt wird.